# EUROPEAN PATENT SPECIFICATION

(11) **EP 2 868 823 B1**
(45) Date of publication and mention of the grant of the patent: **05.12.2018**
(21) Application number: 14191093.5
(22) Date of filing: 30.10.2014
(51) Int. Cl.: E03F 7/04, E03F 7/06, E03F 9/00

(54) **Vermin barrier and method of operating said vermin barrier**
Schädlingsbarriere und Verfahren zum Betreiben einer solchen
Barrière de vermine et méthode d'opération d'une telle

(30) Priority: 31.10.2013 DK 201370638
(43) Date of publication of application: 06.05.2015
(73) Proprietor: Nordisk Innovation ApS, 8250 Ega (DK)
(72) Inventor: Sørensen, Flemming Lykke, 8250 Egå (DK)
(74) Representative: Plougmann Vingtoft a/s

(56) References cited:
- EP-A1- 0 316 584
- EP-A2- 1 132 533
- AT-A4- 506 082
- DE-B3-102005 016 526
- DE-C1- 19 757 743

## Description

### TECHNICAL FIELD

The present invention relates to a vermin barrier for mounting in a sewer system and issues regarding sewage water flow in such sewer systems. The vermin barrier is intended to hinder or block preferably rats, or other similar animals, from passing.

### BACKGROUND

Vermin barriers are well known in the art.

CA 2 279 723 relates to an animal control gate for culverts or the like. An apparatus is disclosed for screening off the ends of culverts and the like so that animals, such as beavers and muskrats, are unable to gain access to the interior of the culvert and are limited to building outside the culvert. The device includes a gate member with means for raising and lowering the gate to clear debris away from the mouth of the culvert.

EP 2 113 615 relates to a barrier for preventing rats or other vermin from entering a sewage pipe. The barrier comprises a support element that is mountable within the pipe, and a first shutter pivotally suspended within the support element for rotation about a horizontal axis and having a centre of gravity lying under the axis. The shutter is pivotal between a first angular position in which the first shutter is forming an acute angle with the direction of flow and at least substantially barring the aperture of the barrier, and a second angular position in which the first shutter is forming a second relatively smaller angle with the direction of flow thus keeping the aperture of the barrier at least partly open. Preferably, a second shutter is placed upstream of a first shutter and is pivotally suspended about a second axis and having a centre of gravity located under the second axis. The first shutter can be suspended within the support element in two different orientations such that the direction in which the barrier blocks vermin from passing may be changed according to the needs without changing the orientation of the support element.

EP 0 316 584 A1 relates to a purging pipe, in particular for waste water containing faecal matter, having an optical probe which operates by the principle of total internal reflection and has a probe head which is arranged in the purging pipe, in a manner such as to be exposed to wetting, at the height of the liquid level which is to be monitored. In this type of probe, environmental conditions and the frequency of activation play no part. The probe responds only when the total reflection is cancelled as a consequence of the wetting of the probe head. The purging pipe is particularly suitable, because of its increased functional reliability, for the protection of buildings at risk from backpressure.

EP 1 132 533 A2 relates to a process for rinsing a mixing water channel having at least two sections arranged one after the other that can be shut off comprises shutting off the section lying upstream from the section lying downstream by means of a bulkhead so that rinsing can be carried out. After reaching a prescribed dam height in the upstream section of the mixing water channel the shutting off process is abruptly stopped.
AT 506 082 A4 describes that a valve has an automatic closure actuated by extraneous energy of electrically, pneumatically or hydraulically operated electric motor. A safety closing device is actuated independent of the automatic closure.
DE 197 57 743 C1 describes that a back flow preventer has a back flow detector with a drive lock adjuster actuated by the detector. A drive closure is placed in a first position when the back flow is present and is movable into a second discharge position for the back flow, in which the drain is closed. The emergency closure is movable by the adjuster to a third operational position, in which a discharge of the drain water is possible, if no back flow is present, and is moved by self adjustment into a closed position by the discharge.

It is a further object of the present invention to provide an alternative to the known art. Further objectives appear from the description, claims and figures.

### SUMMARY

Due to the nature of a barrier in a flow of sewage water, there is a risk of such barriers being blocked by substances included in the sewage water. Most often the known vermin barriers are designed to allow vermin to pass in a downstream direction of the sewage system, i.e. leading away from e.g. housings. In this context the barrier may open to a certain degree, so as to avoid blocking the flow of sewage water and allow vermin to escape to a more desired location away from e.g. housings, as vermin may not swim against upstream sewage water flowing at a rate which opens the barrier. Although the barriers are designed in this way, there is a risk of the barriers being blocked by substances.

According to the present invention, a barrier according to claim 1 is adapted for preventing vermin, preferably rats or similar animals, from passing a sewage pipe is presented, where the barrier is configured for being mounted at least partly within a sewage pipe.
This barrier has
- at least one shutter,
- a support structure adapted for having, such as having, at least one shutter pivot about a hinge provided in the support structure, where the shutter may pivot from a substantially vertical position to an angular position away from vertical, when subject to influence by a flow of the sewage water, where the at least one shutter is having a spatial extension sufficient to not allowing vermin, preferably rats, to pass the barrier when the shutter is in the substantially vertical position, corresponding to a closed position, in the sewage pipe,and where the at least one shutter has a spatial extension in said closed position that allows water to pass the barrier,and where the barrier is adapted to prevent the shutter from pivoting in one direction, in order to prevent vermin from passing the barrier in said one direction, and wherein the barrier comprises - an opening mechanism arranged for opening the at least one shutter, - a trigger configured for triggering the opening mechanism.

A barrier as described above is improved over the known barriers in that, in case of a blocking of the sewage pipe, it may open the shutter based on a trigger, which triggers the opening mechanism. It is hereby obtained, that at least a majority of flow resistance caused by the barrier is substantially reduced and that the blockage may pass through the barrier in order to re-establish regular flow in the sewage pipe.
It is noted that the barrier may be installed in a sewage pipe as described in any one of EP 1 826 326 A2 or EP 2 113 615 A1, which are both hereby incorporated by reference in entirety. It is furthermore noted, that said at least one shutter may be capable of being positioned either in a first orientation in the barrier or in another orientation in the barrier, depending on the possible entering of the vermin, as described in EP 2 113 615 A1, cf., e.g., claim 1, which is hereby incorporated by reference in entirety. Particularly, the barrier according to the present invention may have a mounting mechanism comprising two wings, which each have a shape conforming to the sewage pipe interior, preferably the two wings has the shape of a part of the circumference of a circular pipe. The mounting mechanism may be expanded to establish a mounting of the barrier in the sewage pipe. Advantageously, the barrier may accordingly be mounted in standard circular pipes with various diameters because the barrier is insertable, at least partly, in such standard pipes. Additionally, the barrier is easy to replace and/or temporally remove for service and maintentence.

By 'opening mechanism arranged for opening the at least one shutter' may be understood a mechanism which may be triggered and in response to the triggering may open the at least one shutter. It may be understood, that the opening mechanism may comprise a force delivering unit, such as a float arranged to deliver a force upon an increase in buoyancy, an electrical motor connected to a source of electrical energy (such as a power grid or an electrical battery), a hydraulic unit, a spring or similar elements.
By trigger configured for triggering the opening mechanism' may be understood a unit which is capable of detecting a triggering event (such as sewage water reaching a predetermined level or receipt of a signal from an internal or external unit) and for triggering the opening mechanism in response to detection of the triggering event.
By 'when subject to influence by a flow of the sewage water' may be understood that the shutters are arranged in a manner so that they only may pivot in a direction caused by the force of a flow i.e. that the flow induces a force which causes the shutter, at least initially, to be be pivotally displaced. Notice that the barrier according to the present invention may therefore not be suitable for controlling the flow of sewage water itself.

By 'shutter' is to be understood a shutter having an spatial extension sufficient to not allowing a vermin, preferably a rat, to pass the barrier according to the present invention when the shutter is in the substantially vertical position in the corresponding sewage pipe i.e. in a closed position. Additionally, the shutter has a spatial extension - in said closed position - that allows water to pass the barrier. Preferably, the shutter may have a wholly or partly circular shape allowing water to flow between the shutter and the sewage pipe i.e. at the periphery of the shutter when the shutter is in a said closed position. This is important in order not to obstructing the sewage water flow also at a relatively low flow of sewage water.
The term 'rat or similar animals' may be understood to include at least the two main rat species known to live in populated areas; i.e. black rat (*Rattus rattus*) and brown rat (*Rattus norvegicus*), but the barrier according to the present invention may be applied for other rats species, and/or similar sized animals (e.g. other rodents) inhabiting sewage pipes and systems.
The barrier may be configured to primarily prevent the shutter from pivoting in an upstream direction. This is relevant for preventing the vermin from passing the barrier in an upstream direction, such as in situations, where the vermin barrier is used for preventing vermin to enter sewage pipes conveying sewage water away from housings.
The trigger may be configured to trigger the opening mechanism by a triggering event included in an event group comprising:
- a raise of sewage water above a predetermined sewage water level,
- receipt of a signal from an internal or separate signal transmitter,
- receipt of a signal from a sewage water level detector.
By having the opening mechanism being triggered by a raise of sewage water above a predetermined sewage water level, may be obtained that if a blockage of the barrier causes the sewage water level to rise, such as rise above a predetermined sewage water level, then the mere raise of the sewage water level alone may open the shutter so as to increase a chance that a blockage which was held back by the shutter is released, so as to let the blockage pass. Also, in case of a raise in water level, a water level detector, such as an electronic water level sensor, may initiate that the shutter is opened. By having the opening mechanism being triggered by a receipt of a signal from a separate signal transmitter, such as from a flooding alert detector or a person or system monitoring the trigger, may be obtained that the opening of the barrier is not dependent on a raise in sewage water level, and/or that the shutter may be opened at any desired point in time. An internal or external signal transmitter may be arranged for opening the shutter at a plurality of points, in time, such as equilaterally distributed points in time, such as random points in time. An advantage thereof may be that blockages can be automatically released without the need for manual intervention or water level sensors. An appropriate time period between such automated openings of the shutter may be approximately one week. The shutter may be arranged so that the opening mechanism is triggered when the trigger has not been triggered for an extended period of time, the trigger may be triggered to ensure that the shutter is opened just to make sure that any smaller blockage may pass the barrier.

The opening mechanism of the barrier may have an activator configured to open the at least one shutter. In this way remote signals or detector signals may cause the opening mechanism to be operated by the activator. By 'activator' may be understood a motor unit operatively connected to a power source, such as a float arranged to deliver a force when experiencing an increase in buoyancy, such as an electrical motor operatively connected to an electrical battery and arranged to convert the electrical energy into a force, so as to enable that the opening mechanism is triggered merely by receipt of a signal, such as not necessitating supplying energy or force to the barrier.

The at least one shutter may be located in an upstream or downstream flow direction in sewage pipe, such as at an upstream end of a sewage pipe or a downstream end of a sewage pipe. The barrier may be positioned at least partially within a sewage pipe, such as partially within a sewage pipe and partially outside of a sewage pipe, such as partially in a well adjacent the sewage pipe. The shutter may be located in a downstream sewage pipe to let vermin escape away from housings. However, the shutter may also be used in an upstream sewage pipe, such as a sewage pipe leading to a sewage reservoir, where normally sewage water flows downstream, but in case of flooding the flow becomes upstream.

In general, when referring to placement in an upstream flow direction or upstream sewage pipe, it may be understood that reference is made to an upstream end of a sewage pipe, i.e. the end where the sewage water exits the sewage pipe. In general, when referring to placement in a downstream flow direction or downstream sewage pipe, it may be understood that reference is made to a downstream end of a sewage pipe, i.e. the end where the sewage water enters into the sewage pipe.

The trigger may be located in an upstream or downstream flow direction relative to the at least one shutter. A trigger may also be located both upstream and downstream relative to the shutter. A trigger may primarily be located to a side of the shutter, where a blockage is most likely to occur and a need of triggering is desired.

The barrier may comprise a water level sensor, such as a water level sensor arranged to sense the presence of a sewage water level above a predetermined level, such as operatively connected to the trigger so that the raise in sewage water level above the predetermined level may be a triggering event for triggering the opening mechanism. The water level sensor may be located in an upstream or downstream direction relative to the at least one shutter. The water level sensor may also be located both upstream and downstream relative to the shutter. A water level sensor may primarily be located to a side of the shutter where a blockage is most likely to occur and a need of detection of water level is desired. The water level sensor may be positioned in an upstream direction relative to the at least one shutter, so that when water is flowing towards the barrier, and the barrier is blocked and the water consequently rises on the upstream side of the barrier, then the water level sensor is capable of detecting this raise of the water level on the upstream side of the barrier.

The water level sensor may be positioned so that the at least one shutter may only pivot towards the water level sensor. An advantage of this may be, that if a water level rises above a predetermined level, then the water level sensor may be arranged for triggering an opening of the at least one shutter so that water may flow through the barrier in a direction against the pivot direction of the at least one shutter. Thus, a barrier may be provided which enables blocking vermin in one direction, while allowing flow of water in the same direction, such as when the water exceeds a predetermined water level.

The barrier may have a trigger and an activator for the opening mechanism in form of a float, which float is adapted to, by an increased buoyancy of the float, when subjected to a raise in the sewage water level to a predetermined level, activate an opening mechanism to open the at least one shutter. In this case, the float acts both as a trigger and as an activator. This configuration constitutes a very simple barrier, where no additional power source other than the raise in the sewage water level is required to increase the floats buoyancy and in turn open the at least one shutter.

The float may primarily be located in a well chamber. A well chamber is suitably large to house a simple barrier, such as a barrier which is operated by a float.

The float may be located in an upstream or downstream flow direction of sewage water in a well chamber, such as in an upstream or downstream flow direction of sewage water in a well chamber relative to the float. The primary objective may be to have the float at a location, where a raise in water level is likely to occur due to a blockage.

A barrier may have the at least one shutter of the barrier inserted in sewage pipe, where the barrier has a trigger in form of a detector for detecting a raise in a level of the sewage water above a predetermined level, and wherein a detection of the raise in a level of the sewage water above a predetermined level activates, such as triggers, such as causes the trigger to trigger, the opening mechanism to open the at least one shutter. It is hereby obtained that the detector may be placed at any location relative to the shutter.

A barrier may have an opening mechanism with an electrical motor for opening the at least one shutter. This enables a very compact design.

A barrier may have one shutter of the barrier inserted in an upstream flow direction of a sewage pipe. Also, the barrier may have a trigger in form of a detector for detecting a raise in a level of the sewage water above a predetermined level in an upstream location, such as an upstream location with respect to the at least one shutter, and where the detection by the detector is adapted to activate an opening mechanism to open the at least one shutter. It is hereby obtained that the detector may be placed upstream to the shutter and be able to detect an upstream blockage, which would be unlikely to detect if the detector were placed downstream.

A barrier may have an opening mechanism with an actuator connected to at least one rod, wherein the rod is connected to the at least one shutter of the barrier in order to open the shutter. The rod provides a larger degree of freedom with respect to the location of the shutter with respect to the actuator, such as enables the actuator to be placed at a distance with respect to the shutter. The shutter may be located at a sewage pipe end or start or moved further into the sewage pipe in order to attract the vermin to enter the pipe. And in particular, when the shutter is pivotable in a direction to allow the vermin to escape.

Moreover, the invention involves a method of operating a barrier adapted for preventing vermin, preferably rats or other similar animals, from passing a sewage pipe according to any preceding claim, where the method involves
- inserting and mounting at least part of the barrier within a sewage pipe, where the barrier comprises
- at least one shutter,
- a support structure adapted for having at least one shutter pivot about a hinge provided in the support structure, where the shutter is pivotable from a substantially vertical position to an angular position away from vertical, when subject to influence by a flow direction of the sewage water,
and where the barrier is adapted to prevent the shutter from pivoting in an upstream direction, in order to prevent vermin passing the barrier in a flow direction of the sewage water, and wherein the barrier comprises
- an opening mechanism arranged for opening the at least one shutter,
- a trigger configured for triggering the opening mechanism,
and where a blockage of the sewage pipe is allowed to pass the barrier by triggering the opening mechanism to open the shutter to increase a sewage water flow through the barrier. The method hereby decrease an amount of inspecting and cleaning sewage pipes with vermin barriers as less blockage of the barriers will occur.

The method may include that an opening of the opening mechanism is activated, such as remotely activated by a signal, such as a text message. Such a remote activation by a signal, such as from a flooding alert detector or a person or system monitoring the trigger, and the trigger has not been triggered for an extended period of time, the trigger may be triggered to ensure that the shutter is opened just to make sure that any smaller blockage may pass the barrier.

The method may include that the opening mechanism is remotely activated by a signal, which is sent repeatedly at random intervals. This may be used for allowing amounts of sewage material to pass the barrier, where the amounts could otherwise increase a likelihood of a blockage.

The method may include, that the barrier is adapted to send a signal alert, when the opening mechanism has been triggered by a signal from a detector. Such an alert may be used as an indicator that an inspection may be required.

The method may include, that the barrier is adapted to send a signal alert, such as a signal alert which indicates urgency, when the opening mechanism has been constantly triggered by a signal from a detector in a predetermined period and/or wherein the opening mechanism has been triggered multiple times by a signal from a detector in a predetermined period, and wherein the signal enables a receiver of said signal alert to deduce that the opening mechanism has been constantly triggered by a signal from a detector in a predetermined period and/or wherein the opening mechanism has been triggered multiple times by a signal from a detector in a predetermined period. This may indicate a malfunction, for example that the blockage may not be passing the barrier and that an inspection and possible cleaning may have to take place urgently.

Moreover, the invention involves a method of operating a barrier adapted for preventing vermin from passing a sewage pipe according to any preceding claim, where the method involves
- inserting and mounting at least part of the barrier within a sewage pipe, where the barrier comprises
- at least one shutter,
- a support structure adapted for having at least one shutter pivot about a hinge provided in the support structure, where the shutter is pivotable from a substantially vertical position to an angular position away from vertical, when subject to influence by a flow direction of the sewage water,
and where the barrier is adapted to prevent the shutter from pivoting in an upstream direction, in order to prevent vermin passing the barrier in a flow direction of the sewage water, and wherein the barrier comprises
- an opening mechanism arranged for opening the at least one shutter,
- a trigger configured for triggering the opening mechanism,
and wherein the method further comprises
- triggering the opening mechanism, and
- opening the at least one shutter with the opening mechanism.
An advantage of this method may be that a blockage of the sewage pipe is allowed to pass the barrier by triggering the opening mechanism to open the shutter to increase a sewage water flow through the barrier. The method may thereby decrease an amount of inspecting and cleaning sewage pipes with vermin barriers as less blockages of the barriers will occur.
It is understood that the method may be combined with any other method, in particularly the method steps specified in the independent method claims.

### BRIEF DESCRIPTION OF THE FIGURES

The barrier according to the invention will now be described in more detail with regard to the accompanying figures. The figures show ways of implementing the present invention and are not to be construed as being limiting to other possible embodiments falling within the scope of the attached claim set.
- Figure 1 is a side sectional view of a barrier inserted in a downstream sewage pipe, where the shutters are closed,
- Figure 2 is a side sectional view of a barrier inserted in a downstream sewage pipe, where the shutters are open,
- Figure 3 is a perspective view, where the mounting means are removed in order to show more details,
- Figure 4 is a perspective view showing details of an opening mechanism based on activation by a float,
- Figures 5 and 6 are side view of details of the opening mechanism and how it functions,
- Figures 7 and 8 are side sectional views of the barrier inserted in a downstream sewage pipe, where the opening mechanism is operated by a motor driven device, and the shutters are closed and open, respectively,
- Figure 8 is a side sectional view of details of the opening mechanism,
- Figures 9 is a detailed sectional view of an opening mechanism based on motor driven activation,
- Figure 10 and 11 are side sectional views of a barrier inserted in a downstream sewage pipe, where the shutters are closed and open, respectively,
- Figure 12 is a detailed perspective view of an opening mechanism based on triggering and activation by a float, where the mechanism exerts a pushing action, and the float and mechanism is in a neutral non-pushing position,
- Figure 13 is a detailed perspective view of an opening mechanism based on triggering and activation by a float, where the mechanism is adapted to exert a pushing action, and the float and mechanism is in full pushing position,
- Figure 14 is a detailed side view of an opening mechanism, which is configured to exert a pulling action, i.e. opposite to Figures 12 and 13,
- Figures 15 and 16 are side sectional views of the barrier, where the opening mechanism is operated by a motor driven device, and where the barriers are inserted in a downstream and an upstream sewage pipe, respectively.

### DETAILED DESCRIPTION

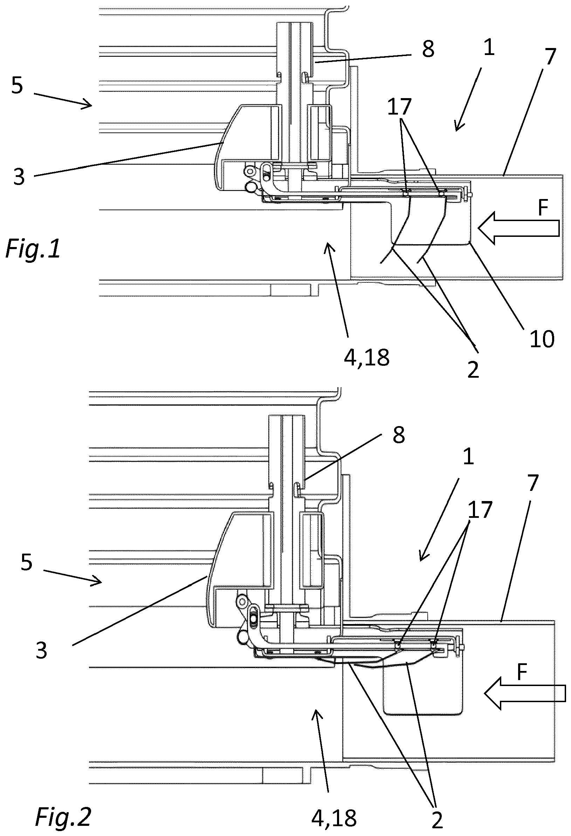

Figures 1 and 2 display a vermin barrier 1, in particular a barrier for rats, where the vermin may pass in a downstream flow direction, but not in an upstream flow direction. Downstream is here to the left and upstream to the right; downstream is indicated by the arrow F. Also, it is shown, that the barrier 1 is partly mounted in a sewage pipe 7, whereas a float is in a position inside a well chamber 5. In some embodiments, the barrier may be partly inserted in a sewage pipe adjacent to a wall chamber. The barrier 1 has an opening mechanism triggered by a float 3, which in this case is guided by a pipe 8. The pipe 8 is also used for guiding a rod with an e.g. a socket wrench in the end for spanning a not shown bolt, which is part of an only indicated mounting mechanism 10. The mounting mechanism comprises two wings, which have a shape conforming to the sewage pipe 7 interior, and are expanded to establish a mounting of the barrier 1 in the sewage pipe. The opening mechanism 4 has a structure 18, which has two hinges 17 about which shutters 2 may pivot. The shutters are arranged in a manner so that they only may pivot in a downstream direction caused by the force of a downstream flow. This may be seen from the difference between the positions of the shutters 2, where in Figure 1 the float 3 is in a low position and the shutters 2 are essentially in a vertical position and in Figure 2, where the shutters 2 are essentially horizontal and the float 3 is in a higher position. The type of barrier 1 as shown in Figures 1 and 2 may have a particular use for not letting vermin exit the well chamber 5, but in case of massive flooding of the well chamber 5, shutters 2 are opened to enable a free flow of water out to e.g. reservoir in a direction opposite to the arrow F. Any vermin that possibly could escape during this extreme situation, are presumed to be drowned.

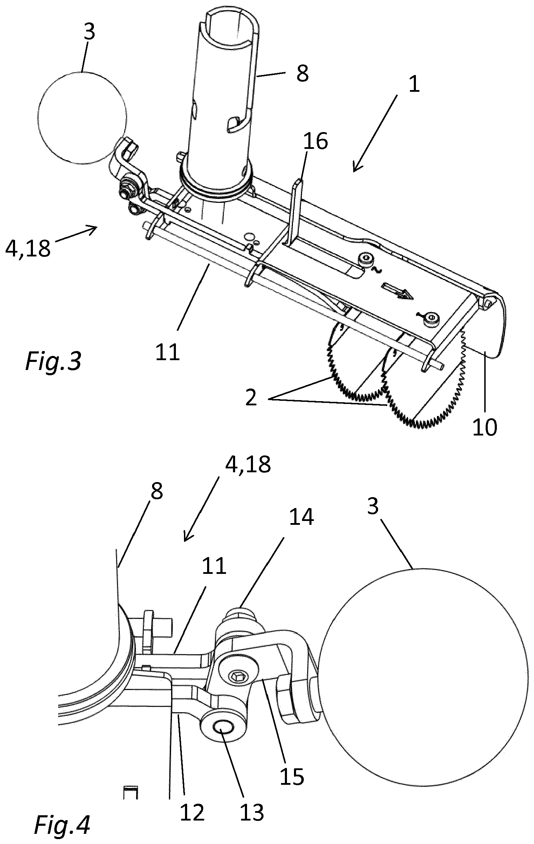

Figure 3 displays a vermin barrier 1 having a float 3 for both triggering and opening an opening mechanism 4. The barrier is opened by pivoting the shutters 2 by pushing the rod 11. The structure 18 includes an insertion limiter 16, which may be used for precise positioning of the barrier. Also, a pipe 8 is used for guiding a rod with an e.g. a socket wrench in the end for spanning a not shown bolt. For the sake of easier understanding, one half of the mounting mechanism 10 is shown in order not to block the view to the rod 11 etc.

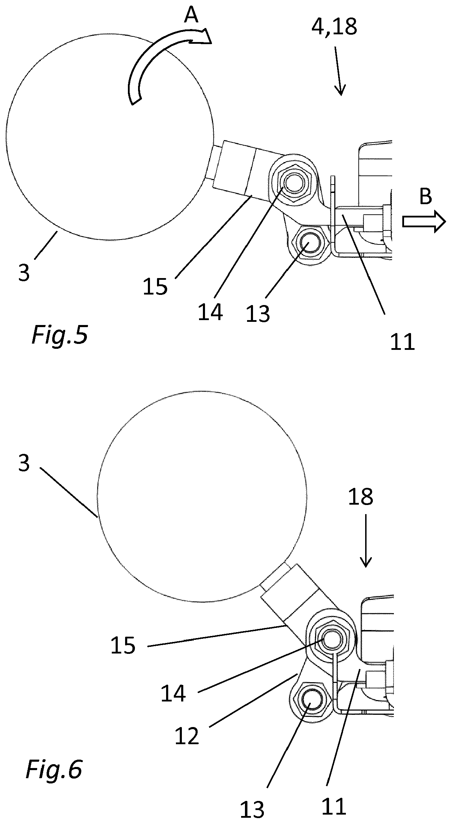

Figures 4 to 6 show more detailed the operation the opening mechanism 4 and of the rod 11. A bracket 12 is fixed to the structure 18. At a hinge 13 is a bracket 15 pivotably attached. The bracket 15 is connected to the float 3. A further hinge 14 connects the rod 11 to the bracket 15. In Figure 5 a raise in the level of sewage water (not shown) influences the float 3 via the bracket 15 and the hinge 13 to pivot in the direction indicated by the arrow A. This causes the position of the hinge 14 to move to the right and push the rod 11 in the direction indicated in Figure 5 by the arrow B. Figure 6 shows the float in its highest position, where the rod 11 is pushed as far to the right as possible.

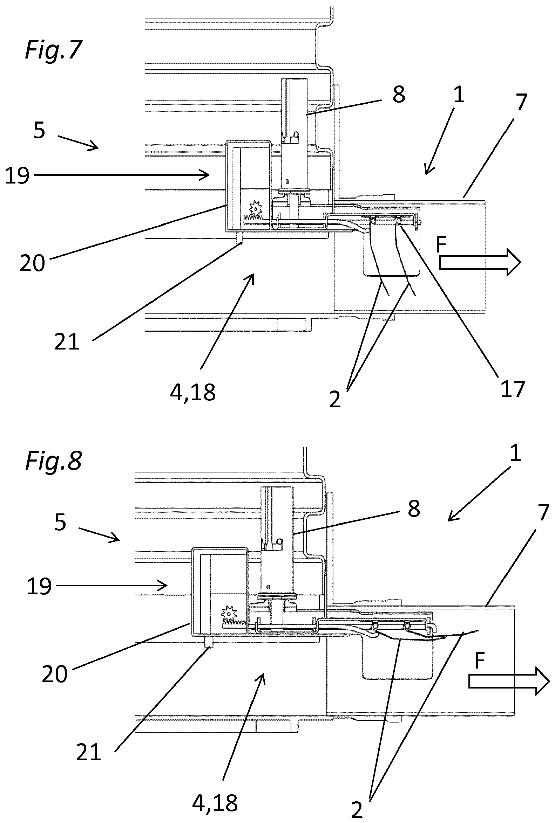

Figures 7 and 8 display a vermin barrier 1, in particular a barrier for rats, where the vermin may pass in a downstream direction, but not in an upstream direction. Downstream is indicated by the arrow F. Also, it is shown, that the barrier 1 is partly mounted in a sewage pipe 7, whereas a motor driven apparatus 19 inside a well chamber 5. In some embodiments, the barrier may be partly inserted in a sewage pipe adjacent to a wall chamber. The barrier 1 has an opening mechanism triggered by a detector 21 mounted on a motor housing 20. The mounting mechanism 10 comprises two wings, which have a shape conforming to the sewage pipe 7 interior, and are expanded to establish a mounting of the barrier 1 in the sewage pipe. The opening mechanism 4 has a structure 18, which has two hinges 17 about which shutters 2 may pivot. The shutters are arranged in a manner so that they only may pivot in a downstream direction caused by the force of a downstream flow. This may be seen from the difference between the positions of the shutters 2 in Figures 7 and 8, where in Figure 7 the float 3 is in a low position and the shutters 2 are essentially in a vertical position, and in Figure 8, where the shutters 2 are essentially horizontal. The type of barrier 1 as shown in Figures 7 and 8 may have a particular use for letting the vermin as well as a normal flow of sewage water exit the well chamber 5.

This type of barrier 1 will respond to a downstream blockage, where the sewage water may cause a triggering of the detector 21, which will signal the motor driven apparatus 19 to open the shutters 2 with the opening mechanism 4.

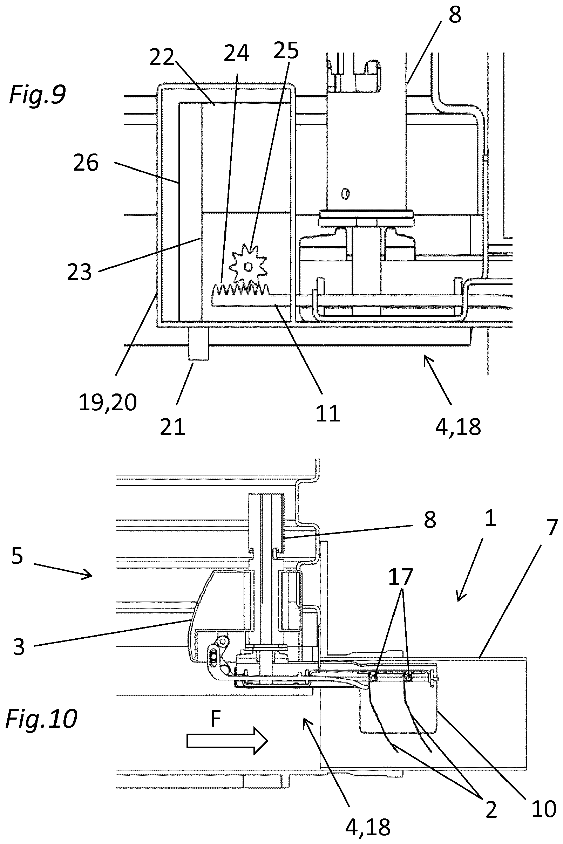

Figure 9 shows details of the motor driven apparatus 19. A motor 23 is located inside a housing 20. A sewage water detector 21 is mounted on the housing 20 and connected to a control box located inside the housing. Further inside the housing is located a battery for applying power to the motor. Alternatively, an external power supply may be used, such as the electrical grid. Again a pipe 8 is shown, which is used for installing and mounting the barrier 1. To pull or push a rod 11, which is part of an opening mechanism 4 with a structure 18, is used a toothed rack 24, which is driven by the motor 23 via a pinion 25.

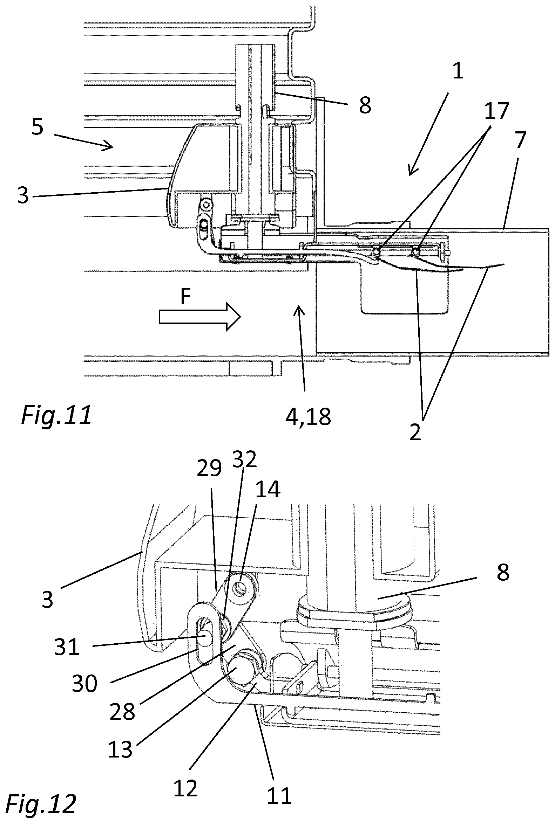

Figures 10 and 11 display a vermin barrier 1, where the vermin may pass in a downstream direction, but not in an upstream direction. Downstream is indicated by the arrow F. Also, it is shown, that the barrier 1 is partly mounted in a sewage pipe 7, a float 3 is inside a well chamber 5. The type of barrier 1 as shown in Figures 7 and 8 may have a particular use for letting the vermin as well as a normal flow of sewage water exit the well chamber 5. The remaining parts in Figures 10 and 11 correspond to figures 1 and 2. Only in this mounting way, the shutters 2 are directed for letting out a flow of water indicated by the arrow F as well as vermin. In case of a downstream blockage, i.e. in the sewage pipe 7, the sewage water level may raise the float 3 to trigger and open the opening mechanism 4.

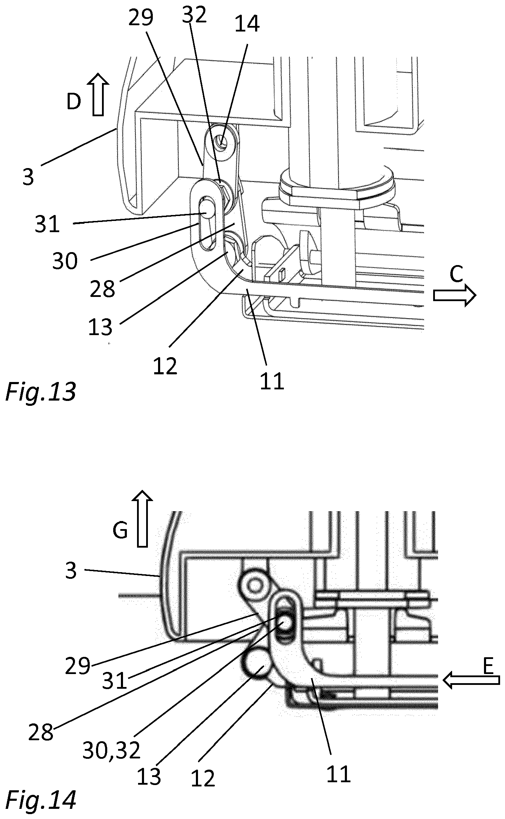

Figures 12 and 13 display details of how the float 3 triggers and operates the opening mechanism 4 to provide a pushing action to the rod 11. A fixed bracket 12 is connected to the structure 18 of the opening mechanism. A lower bracket 28 is connected to the fixed bracket via a hinge 13, which allows the lower bracket to pivot. At an opposite side of the lower bracket 28 it is connected to a higher bracket 29 via a hinge 32. The higher bracket 29 is connected to the float 3 via a hinge 14. The rod 11 ends in a bending comprising a slot 30. The lower and higher brackets 28, 29 are connected to the rod 11 via a tap 31, which is connected to the hinge 32. In Figure 13 the float is shown in a fully raised position, caused by an upwards movement in the direction of the arrow G. Due to this, the hinge 32 and the tap 31 is moved to the right to cause a pushing action to the rod 11 via the slot 30 and in the direction shown by the arrow C.

Figure 14 displays details of how the float 3 triggers and operates the opening mechanism 4 to provide a pulling action to the rod 11. A fixed bracket 12 is connected to the structure 18 of the opening mechanism. A lower bracket 28 is connected to the fixed bracket via a hinge 13, which allows the lower bracket to pivot. At an opposite side of the lower bracket 28 it is connected to a higher bracket 29 via a hinge 32. The higher bracket 29 is connected to the float 3 via a hinge 14. The rod 11 ends in a bending comprising a slot 30. The lower and higher brackets 28, 29 are connected to the rod 11 via a tap 31, which is connected to the hinge 32. In Figure 14 the float is shown in a neutral, non-raised position, but when subjected to a sewage water raise which will cause an upwards movement in the direction of the arrow G. Due to this, the hinge 32 and the tap 31 is moved to the left to cause a pulling action to the rod 11 via the slot 30 and in the direction shown by the arrow E. In general it may be said that in neutral position the lower and higher brackets 29 form a V-shape, which is stretched out to an I-shape, where the acute angle of the V-shape for pushing action is directed to the left, as in Figure 13, and for pulling action to the right, as in Figure 14.

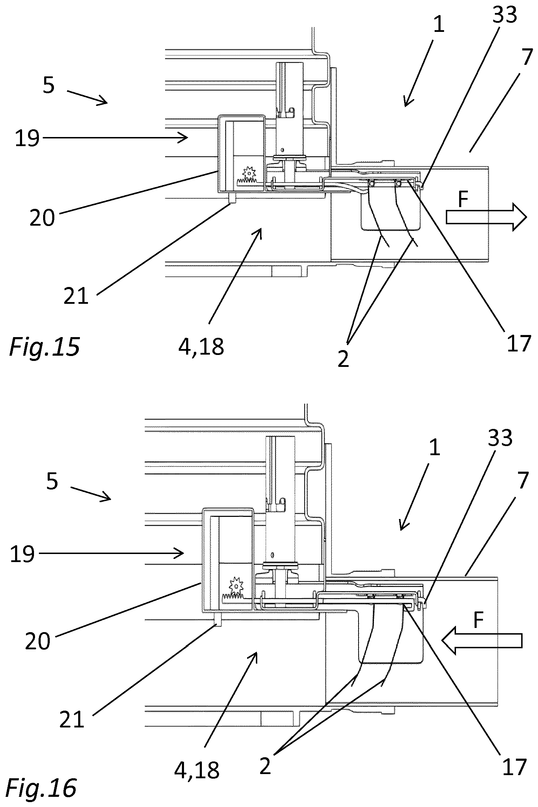

Figures 15 and 16 display a vermin barrier 1. Also, it is shown, that the barrier 1 is partly mounted in a sewage pipe 7, whereas a motor driven apparatus 19 inside a well chamber 5. In some embodiments, the barrier may be partly inserted in a sewage pipe adjacent to a wall chamber. The barrier 1 has an opening mechanism triggered by a detector 21 mounted on a motor housing 20 or another detector. 33 mounted on the structure 18 of the opening mechanism 4. The opening mechanism 4 has a structure 18, which has two hinges 17 about which shutters 2 may pivot. The shutters are arranged in a manner so that they only may pivot in a one direction caused by the force of the sewage water flow, as indicated by the arrows F. In both Figures 15 and 16 the shutters 2 are essentially in a vertical, neutral position. In both Figures 15 and 16 the shutters are allowed to pivot, when subjected to a flow of sewage water, again as indicated by the arrows F.

In Figure 15, the shutters 2 will prevent vermin to enter the well chamber 5 from the sewage pipe 7. A blockage in the sewer pipe 7 will be detected early be the detector 33 and later by the detector 21 and may hence provide an earlier trigger signal to the motor driven apparatus to open the shutter 2 with the opening mechanism 4. This will enable a larger flow of sewage water to remove the blockage.

In Figure 16, the shutters 2 will prevent vermin to enter the sewage pipe 7 from the well chamber 5. A blockage in the sewer pipe 7, which is pushed downstream by the sewage water flow towards the barrier 1 will be detected be the detector 33, when reaching the detector 33. This may trigger the detector 33 to send a signal to the motor driven apparatus, in order to open the shutter 2 with the opening mechanism 4. This will enable the flow to let the blockage easier pass the shutters 2, when they are motor driven to a substantially horizontal position.

In exemplary embodiments, the invention may relate to any one of embodiments E1-E17 below:
E1. Barrier adapted for preventing vermin from passing a sewage pipe, where the barrier is configured for being mounted at least partly within a sewage pipe, and where the barrier comprises
   - at least one shutter,
   - a support structure adapted for having at least one shutter pivot about a hinge provided in the support structure, where the shutter may pivot from a substantially vertical position to an angular position away from the substantially vertical position, when subject to influence by a flow of the sewage water,
   and where the barrier is adapted to prevent the shutter from pivoting in one direction, in order to prevent vermin from passing the barrier in said onedirection, and wherein the barrier comprises
   - an opening mechanism arranged for opening the at least one shutter,
   - a trigger configured for triggering the opening mechanism.
E2. Barrier according to embodiment E1, wherein said one direction primarily is an upstream direction.
E3. Barrier according to embodiment E1 or embodiment E2, wherein the trigger is configured to trigger the opening mechanism by a triggering event included in an event group comprising:
   - a raise of sewage water above a predetermined sewage water level,
   - receipt of a signal from a separate signal transmitter,
   - receipt of a signal from a sewage water level detector.
E4. Barrier according to claim any of embodiments E1 - E3, where the opening mechanism comprises an activator configured to open the at least one shutter.
E5. Barrier according to any of embodiments E1 - E4, where the at least one shutter is located in an upstream or downstream flow direction of a sewage pipe.
E6. Barrier according to any of embodiments E1 - E5, wherein the trigger is located in an upstream or downstream flow direction relative to the at least one shutter.
E7. Barrier according to any of embodiments E1 - E6, wherein the barrier comprises a trigger and an activator for the opening mechanism in form of a float, which float is adapted to, by an increased buoyancy of the float when subjected to a raise in the sewage water level to a predetermined level, activate an opening mechanism to open the at least one shutter.
E10. Barrier according to embodiment E7, wherein the float is located in a well chamber.
E11. Barrier according to embodiment E10, wherein the float is located in an upstream flow direction of sewage water in a well chamber.
E12. Barrier according to any preceding embodiment, wherein the at least one shutter of the barrier is inserted in sewage pipe, and the barrier comprises a trigger in form of a detector for detecting a raise in a level of the sewage water above a predetermined level, and wherein a detection of the raise in a level of the sewage water above a predetermined level activates the opening mechanism to open the at least one shutter.
E13. Barrier according to any preceding embodiment, wherein the opening mechanism comprises an electrical motor for opening the at least one shutter.
E14. Barrier according to embodiment E12 or E13, where the at least one shutter of the barrier is inserted in an upstream flow direction of a sewage pipe, and the barrier comprises a trigger in form of a detector for detecting a raise in a level of the sewage water above a predetermined level in an upstream location, and where the detection by the detector is adapted to activate an opening mechanism to open the at least one shutter.
E15. Barrier according to any preceding embodiments E4 - E14, wherein the opening mechanism comprises an actuator connected to at least one rod, wherein the rod is connected to the at least one shutter of the barrier in order to open the shutter.
E16. Method of operating a barrier adapted for preventing vermin from passing a sewage pipe according to any preceding embodiment, where the method comprises:
   - inserting and mounting at least part of the barrier within a sewage pipe, where the barrier comprises
   - at least one shutter,
   - a support structure adapted for having at least one shutter pivot about a hinge provided in the support structure, where the shutter is pivotable from a substantially vertical position to an angular position away from vertical, when subject to influence by one flow direction of the sewage water,
   and where the barrier is adapted to prevent the shutter from pivoting in an upstream direction, in order to prevent vermin passing the barrier in an upstream direction, and wherein the barrier comprises
   - an opening mechanism arranged for opening the at least one shutter,
   - a trigger configured for triggering the opening mechanism,
   and where a blockage of the sewage pipe is allowed to pass the barrier by triggering the opening mechanism to open the shutter to enable an increased sewage water flow through the barrier.
E17. Method according to embodiment E16, where the method includes that an opening of the opening mechanism is remotely activated by a signal, such as a text message, or where the method includes that the opening mechanism is remotely activated by a signal, which is sent repeatedly at random intervals, or where the method includes, that the barrier is adapted to send a signal alert, when the opening mechanism has been triggered by a signal from a detector, or where the method includes, that the barrier is adapted to send a signal alert when the opening mechanism has been constantly triggered by a signal from a detector in a predetermined period.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Barrier (1) adapted for preventing vermin, preferably rats or similar animals, from passing a sewage pipe (7), where the barrier (1) is configured for being mounted at least partly within a sewage pipe (7), and where the barrier (1) comprises
- at least one shutter (2),
- a support structure adapted for having the at least one shutter (2) pivot about a hinge (17) provided in the support structure, where the shutter (2) may pivot from a substantially vertical position to an angular position away from the substantially vertical position, when subject to influence by a flow of the sewage water,
where the at least one shutter (2) is having a spatial extension sufficient to not allowing vermin, preferably rats, to pass the barrier (1) when the shutter (2) is in the substantially vertical position, corresponding to a closed position, in the sewage pipe (7),
and where the barrier (1) is adapted to prevent the shutter (2) from pivoting in one direction, in order to prevent vermin from passing the barrier (1) in said one direction, and wherein the barrier comprises
- an opening mechanism (4) arranged for opening the at least one shutter (2),
- a trigger configured for triggering the opening mechanism (4), **characterized in that** at least one shutter (2) has a spatial extension in said closed position that allows water to pass the barrier (1).

2. Barrier (1) according to claim 1, where the vermin may pass in a downstream flow direction (F), but not in an upstream flow direction.

3. Barrier (1) according to claim 1 or 2, wherein said one direction primarily is an upstream direction of a sewage pipe (7).

4. Barrier (1) according to claim 1 or 2 or 3, wherein the trigger is configured to trigger the opening mechanism (4) by a triggering event included in an event group comprising:
- a raise of sewage water above a predetermined sewage water level,
- receipt of a signal from a separate signal transmitter,
- receipt of a signal from a sewage water level detector (21, 33).

5. Barrier (1) according to any of claims 1 - 4, where the opening mechanism (4) comprises an activator configured to open the at least one shutter (2).

6. Barrier (1) according to any of claims 1-5, where the at least one shutter (2) is arranged to be located in an upstream or downstream end of a sewage pipe (7), and/or
wherein the trigger is located in an upstream or downstream flow direction relative to the at least one shutter (2).

7. Barrier (1) according to any of claims 1 - 4 and 6, wherein the barrier (1) comprises an activator for the opening mechanism (4) in form of a float (3), which float is adapted to, by an increased buoyancy of the float when subjected to a raise in the sewage water level to a predetermined level, activate the opening mechanism (4) to open the at least one shutter (2).

8. Barrier (1) according to claim 7, wherein the float (3) is arranged to be located in a well chamber (5).

9. Barrier (1) according to claim 8, wherein the float (3) is arranged to be located in an upstream flow direction of sewage water in the well chamber (5).

10. Barrier (1) according to any preceding claims, wherein the at least one shutter (2) of the barrier (1) is arranged to be inserted in the sewage pipe (7), and the trigger is a detector (21, 33) for detecting a raise in a level of the sewage water above a predetermined level, and wherein a detection of the raise in a level of the sewage water above a predetermined level activates the opening mechanism (4) to open the at least one shutter (2).

11. Barrier (1) according to any of the preceding claims, wherein the opening mechanism (4) comprises an electrical motor for opening the at least one shutter.

12. Barrier (1) according to any one of claims 10-11, where the at least one shutter (2) of the barrier is inserted in an upstream flow direction of a sewage pipe, and the trigger is a detector (21, 33) for detecting a raise in a level of the sewage water above a predetermined level in an upstream location, and where the detection by the detector is adapted to activate the opening mechanism (4) to open the at least one shutter (2).

13. Barrier (1) according to any preceding claims 5 or 7, wherein the activator is connected to at least one rod (11), wherein the rod is connected to the at least one shutter (2) of the barrier in order to open the shutter.

14. Method of operating a barrier (1) according to any preceding claims adapted for preventing vermin, preferably rats or similar animals, from passing a sewage pipe (7), where the method comprises:
- inserting and mounting at least part of said barrier (1) within a sewage pipe (7),
and where a blockage of the sewage pipe (7) is allowed to pass said barrier (1) by triggering the opening mechanism (4) to open the shutter (2) to enable an increased sewage water flow through said barrier (1).

15. Method according to claim 14, where
- the method includes that an opening of the opening mechanism (4) is remotely activated by a signal, such as a text message, and/or
- where the method includes that the opening mechanism (4) is activated by a signal which is sent repeatedly at random intervals and/or at predetermined intervals, and/or
- where the method includes that the barrier (1) is adapted to send a signal alert when the opening mechanism (4) has been triggered by a signal from a detector (21, 33), and/or
- where the method includes that the barrier (1) is adapted to send a signal alert when the opening mechanism (4) has been constantly triggered by a signal from a detector (21, 33) in a predetermined period.

## Patentansprüche

1. Barriere (1), angepasst zum Verhindern, dass Schädlinge, bevorzugt Ratten oder ähnliche Tiere, ein Abwasserrohr (7) passieren, wobei die Barriere (1) dazu konfiguriert ist, zumindest teilweise innerhalb eines Abwasserrohrs (7) befestigt zu sein und wobei die Barriere (1) Folgendes umfasst:
- zumindest einen Verschluss (2),
- eine Stützstruktur, die dazu angepasst ist, dass der zumindest eine Verschluss (2) um ein Gelenk (17) schwenkt, das in der Stützstruktur bereitgestellt ist, wobei der Verschluss (2) aus einer im Wesentlichen vertikalen Position in eine angewinkelte Position weg von der im Wesentlichen vertikalen Position schwenken kann, wenn er einem Einfluss durch einen Strom von Abwasser ausgesetzt ist,
wobei der zumindest eine Verschluss (2) eine räumliche Erweiterung aufweist, die ausreichend ist, es Schädlingen, bevorzugt Ratten, nicht zu ermöglichen, die Barriere (1) zu passieren, wenn sich der Verschluss (2) in der im Wesentlichen vertikalen Position, entsprechend einer geschlossenen Position, in dem Abwasserrohr (7) befindet,
und wobei die Barriere (1) dazu angepasst ist, zu verhindern, dass der Verschluss (2) in eine Richtung schwenkt, um zu verhindern, dass Schädlinge die Barriere (1) in der einen Richtung passieren, und wobei die Barriere (1) Folgendes umfasst:
- einen Öffnungsmechanismus (4), der zum Öffnen des zumindest einen Verschlusses (2) angeordnet ist,
- einen Auslöser, der zum Auslösen des Öffnungsmechanismus (4) ausgelegt ist, **dadurch gekennzeichnet, dass** der zumindest eine Verschluss (2) eine räumliche Erweiterung in der geschlossenen Position aufweist, die es Wasser ermöglicht, die Barriere (1) zu passieren.

2. Barriere (1) nach Anspruch 1, wobei die Schädlinge in einer stromabwärts gerichteten Fließrichtung (F) passieren können, jedoch nicht in einer stromaufwärts gerichteten Fließrichtung.

3. Barriere (1) nach Anspruch 1 oder 2, wobei die eine Richtung hauptsächlich eine stromaufwärts gerichtete Richtung eines Abwasserrohrs (7) ist.

4. Barriere (1) nach Anspruch 1 oder 2 oder 3, wobei der Auslöser dazu konfiguriert ist, den Öffnungsmechanismus (4) durch ein Auslöseereignis auszulösen, das in einer Ereignisgruppe enthalten ist, die Folgendes umfasst:
- einen Anstieg des Abwassers über einen vorbestimmten Abwasserpegel,
- Empfang eines Signals von einem separaten Signalsender,
- Empfang eines Signals von einem Abwasserpegeldetektor (21, 33).

5. Barriere (1) nach einem der Ansprüche 1-4, wobei der Öffnungsmechanismus (4) einen Aktivator umfasst, der dazu konfiguriert ist, den zumindest einen Verschluss (2) zu öffnen.

6. Barriere (1) nach einem der Ansprüche 1-5, wobei der zumindest eine Verschluss (2) dazu angeordnet ist, sich in einem stromaufwärts oder stromabwärts gerichteten Ende eines Abwasserrohrs (7) zu befinden, und/oder
wobei sich der Auslöser in einer stromaufwärts oder stromabwärts gerichteten Fließrichtung relativ zu dem zumindest einen Verschluss (2) befindet.

7. Barriere (1) nach einem der Ansprüche 1-4 und 6, wobei die Barriere (1) einen Aktivator für den Öffnungsmechanismus (4) in Form eines Schwimmers (3) umfasst, wobei der Schwimmer durch einen erhöhten Auftrieb des Schwimmers, wenn dieser einem Anstieg des Abwasserpegels auf einen vorbestimmten Pegel ausgesetzt ist, dazu angepasst ist, den Öffnungsmechanismus (4) zu aktivieren, um den zumindest einen Verschluss (2) zu öffnen.

8. Barriere (1) nach Anspruch 7, wobei der Schwimmer (3) dazu angeordnet ist, sich in einer Brunnenkammer (5) zu befinden.

9. Barriere (1) nach Anspruch 8, wobei der Schwimmer (3) dazu angeordnet ist, sich in einer stromaufwärts gerichteten Fließrichtung des Abwassers in der Brunnenkammer (5) zu befinden.

10. Barriere (1) nach einem der vorhergehenden Ansprüche, wobei der zumindest eine Verschluss (2) der Barriere (1) dazu angeordnet ist, in das Abwasserrohr (7) eingesetzt zu werden, und der Auslöser ein Detektor (21, 33) zum Erkennen eines Anstiegs eines Pegels des Abwassers über einen vorbestimmten Pegel ist, und wobei eine Erkennung des Anstiegs eines Pegels des Abwassers über einen vorbestimmten Pegel den Öffnungsmechanismus (4) aktiviert, um den zumindest einen Verschluss (2) zu öffnen.

11. Barriere (1) nach einem der Ansprüche Patentansprüche, wobei der Öffnungsmechanismus (4) einen elektrischen Motor zum Öffnen des zumindest einen Verschlusses umfasst.

12. Barriere (1) nach einem der Ansprüche 10-11, wobei der zumindest eine Verschluss (2) der Barriere in einer stromaufwärts gerichteten Fließrichtung eines Abwasserrohrs eingesetzt wird und der Auslöser ein Detektor (21, 33) zum Erkennen eines Anstiegs eines Pegels des Abwassers über einen vorbestimmten Pegel an einer stromaufwärts gerichteten Standort ist, und wobei die Erkennung durch den Detektor dazu angepasst ist, den Öffnungsmechanismus (4) zu aktivieren, um den zumindest einen Verschluss (2) zu öffnen.

13. Barriere (1) nach einem der vorhergehenden Ansprüche 5 oder 7, wobei der Aktivator mit zumindest einer Stange (11) verbunden ist, wobei die Stange mit dem zumindest einen Verschluss (2) der Barriere verbunden ist, um den Verschluss zu öffnen.

14. Verfahren zum Betreiben einer Barriere (1) nach einem der vorhergehenden Ansprüche, angepasst zum Verhindern, dass Schädlinge, bevorzugt Ratten oder ähnliche Tiere, ein Abwasserrohr (7) passieren, wobei das Verfahren Folgendes umfasst:
- Einsetzen und Befestigen von zumindest einem Teil der Barriere (1) innerhalb eines Abwasserrohrs (7),
und wobei es einer Blockade des Abwasserrohrs (7) erlaubt ist, die Barriere (1) zu passieren, indem der Öffnungsmechanismus (4) ausgelöst wird, um den Verschluss (2) zu öffnen, um einen erhöhten Abwasserstrom durch die Barriere (1) zu ermöglichen.

15. Verfahren nach Anspruch 14, wobei
- das Verfahren beinhaltet, dass ein Öffnen des Öffnungsmechanismus (4) durch ein Signal wie etwa eine Textnachricht aus der Ferne aktiviert wird, und/oder
- wobei das Verfahren beinhaltet, dass der Öffnungsmechanismus (4) durch ein Signal aktiviert wird, das wiederholt in zufälligen Intervallen und/oder vorbestimmten Intervallen gesendet wird, und/oder
- wobei das Verfahren beinhaltet, dass die Barriere (1) dazu angepasst ist, einen Signalalarm zu senden, wenn der Öffnungsmechanismus (4) durch ein Signal von einem Detektor (21, 33) ausgelöst wurde, und/oder
- wobei das Verfahren beinhaltet, dass die Barriere (1) dazu angepasst ist, einen Signalalarm zu senden, wenn der Öffnungsmechanismus (4) fortwährend durch ein Signal von einem Detektor (21, 33) in einem vorbestimmten Zeitraum ausgelöst wurde.

## Revendications

1. Barrière (1) conçue pour empêcher la vermine, de préférence des rats ou des animaux semblables, de passer dans un tuyau d'égout (7), ladite barrière (1) étant configurée pour être montée au moins en partie dans un tuyau d'égout (7) et ladite barrière (1) comprenant
- au moins une trappe (2),
- une structure de support conçue pour que la au moins une trappe (2) pivote autour
d'une charnière (17) disposée dans la structure de support, ladite trappe (2) pouvant pivoter depuis une position sensiblement verticale jusqu'à une position angulaire éloignée de la position sensiblement verticale, lorsque elle est soumise à l'influence d'un écoulement d'eaux d'égout,
ladite au moins une trappe (2) possédant une extension spatiale suffisante pour ne pas permettre à la vermine, de préférence des rats, de passer la barrière (1) lorsque la trappe (2) est dans la position sensiblement verticale, correspondant à une position fermée, dans le tuyau d'égout (7),
et ladite barrière (1) étant conçue pour empêcher la trappe (2) de pivoter dans un sens afin d'empêcher la vermine de passer la barrière (1) dans ledit sens et ladite barrière (1) comprenant
- un mécanisme d'ouverture (4) agencé pour ouvrir la au moins une trappe (2),
- un déclencheur configuré pour déclencher le mécanisme d'ouverture (4) caractérisé dans ce que la au moins une trappe (2) possède une extension spatiale dans ladite position fermée permettant à l'eau de passer la barrière (1).

2. Barrière (1) selon la revendication 1, ladite vermine pouvant passer dans un sens d'écoulement aval (F), mais pas dans un sens d'écoulement amont.

3. Barrière (1) selon la revendication 1 ou 2, ledit sens étant principalement un sens amont d'un tuyau d'égout (7).

4. Barrière (1) selon la revendication 1, 2 ou 3, ledit déclencheur étant configuré pour déclencher le mécanisme d'ouverture (4) par un événement déclenchant compris dans un groupe d'événements comprenant :
- une élévation des eaux d'égout au-dessus d'un niveau d'eaux d'égout prédéfini,
- la réception d'un signal provenant d'un émetteur de signaux distinct,
- la réception d'un signal provenant d'un détecteur de niveau d'eaux d'égout (21, 33).

5. Barrière (1) selon l'une quelconque des revendications 1 à 4, ledit mécanisme d'ouverture (4) comprenant un actionneur configuré pour ouvrir la au moins une trappe (2).

6. Barrière (1) selon l'une quelconque des revendications 1 à 5, ladite au moins une trappe (2) étant agencée pour être située dans une extrémité en amont ou en aval d'un tuyau d'égout (7), et/ou ledit déclencheur étant situé dans un sens d'écoulement amont ou aval par rapport à la au moins une trappe (2).

7. Barrière (1) selon l'une quelconque des revendications 1 à 4 et 6, ladite barrière (1) comprenant un actionneur pour le mécanisme d'ouverture (4) sous la forme d'un flotteur (3), ledit flotteur étant conçu pour actionner, au moyen d'une flottabilité accrue du flotteur lorsqu'il est soumis à une élévation du niveau des eaux d'égout par rapport à un niveau prédéfini, le mécanisme d'ouverture (4) afin d'ouvrir la au moins une trappe (2).

8. Barrière (1) selon la revendication 7, ledit flotteur (3) étant agencé pour se situer dans une chambre à puits (5).

9. Barrière (1) selon la revendication 8, ledit flotteur (3) étant agencé pour se situer dans un sens d'écoulement amont des eaux d'égout dans la chambre à puits (5).

10. Barrière (1) selon l'une quelconque des revendications précédentes, ladite au moins une trappe (2) de la barrière (1) étant agencée pour être insérée dans le tuyau d'égout (7) et ledit déclencheur étant un détecteur (21, 33) destiné à détecter une élévation du niveau des eaux d'égout au-dessus d'un niveau prédéfini, et une détection de l'élévation du niveau des eaux d'égout au-dessus d'un niveau prédéfini actionnant le mécanisme d'ouverture (4) pour ouvrir la au moins une trappe (2).

11. Barrière (1) selon l'une quelconque des revendications précédentes, ledit mécanisme d'ouverture (4) comprenant un moteur électrique pour l'ouverture de la au moins une trappe.

12. Barrière (1) selon l'une quelconque des revendications 10 et 11, ladite au moins une trappe (2) de la barrière étant insérée dans un sens d'écoulement amont d'un tuyau d'égout et ledit déclencheur étant un détecteur (21, 33) destiné à détecter une élévation du niveau des eaux d'égout au-dessus d'un niveau prédéfini dans un emplacement en amont, et ladite détection par le détecteur étant conçue pour actionner le mécanisme d'ouverture (4) pour ouvrir ladite au moins une trappe (2).

13. Barrière (1) selon l'une quelconque des revendications précédentes 5 ou 7, ledit actionneur étant raccordé à au moins une tige (11), ladite tige étant reliée à la au moins une trappe (2) de la barrière afin d'ouvrir la trappe.

14. Procédé de fonctionnement d'une barrière (1) selon l'une quelconque des revendications précédentes conçue pour empêcher la vermine, de préférence des rats ou des animaux semblables, de passer dans un tuyau d'égout (7), ledit procédé comprenant :
- l'insertion et le montage d'au moins une partie de ladite barrière (1) dans un tuyau d'égout (7),
et une obstruction du tuyau d'égout (7) étant autorisée à passer ladite barrière (1) en déclenchant le mécanisme d'ouverture (4) pour ouvrir la trappe (2) pour permettre un écoulement accru des eaux d'égout à travers ladite barrière (1).

15. Procédé selon la revendication 14,
- ledit procédé comprenant l'actionnement à distance de l'ouverture du mécanisme d'ouverture (4) par un signal, tel qu' un message texte, et/ou
- ledit procédé comprenant l'actionnement du mécanisme d'ouverture (4) par un signal qui est envoyé à plusieurs reprises à des intervalles aléatoires et/ou à des intervalles prédéfinis, et/ou
- ledit procédé comprenant une conception de la barrière (1) pour envoyer une alerte par signal lorsque le mécanisme d'ouverture (4) a été déclenché par un signal provenant d'un détecteur (21, 33), et/ou
- ledit procédé comprenant une conception de la barrière (1) pour envoyer une alerte par signal lorsque le mécanisme d'ouverture (4) a été déclenché constamment par un signal provenant d'un détecteur (21, 33) dans une période prédéfinie.
